# EUROPEAN PATENT SPECIFICATION

(11) **EP 3 478 898 B1**
(45) Date of publication and mention of the grant of the patent: **02.11.2022**
(21) Application number: 17819415.5
(22) Date of filing: 26.06.2017
(51) Int. Cl.: E04C 2/12, E04B 2/06, E04B 1/48, F16B 5/00, E04C 2/38, E04B 1/61, E04B 1/10

(54) **METHOD FOR JOINING BOX-TYPE ELEMENTS TO EACH OTHER**
VERFAHREN ZUM VERBINDEN VON KASTENFÖRMIGEN ELEMENTEN MITEINANDER
PROCÉDÉ D'ASSEMBLAGE D'ÉLÉMENTS EN FORME DE BOÎTE LES UNS AUX AUTRES

(30) Priority: 30.06.2016 FI 20165545
(43) Date of publication of application: 08.05.2019
(73) Proprietor: Heinonen, Markku, 27640 Honkilahti kk (FI)
(72) Inventor: Heinonen, Markku, 27640 Honkilahti kk (FI)
(74) Representative: Laine IP Oy
(86) International application number: PCT/FI2017/050478
(87) International publication number: WO 2018/002432

(56) References cited:
- WO-A1-80/00586
- WO-A1-80/00586
- WO-A1-2015/155105
- WO-A1-2015/155105
- CA-A1- 2 348 682
- US-A- 3 823 525
- US-A1- 2003 079 425
- US-A1- 2008 083 177

## Description

### FIELD OF THE INVENTION

The present invention relates to fastening to each other housing elements having a wooden frame structure and possibly comprising insulation material. The elements can be utilised for making space elements, wall structures, floors, intermediate floors, ceilings and other parts of buildings or the buildings themselves

Elements are used in many ways in the field of single family housing construction. The elements can be space elements or structure elements, such as walls, ceilings or floors. The space elements and structure elements are manufactured to the desired completion stage at the factory and assembled to form a complete building at the construction site. The advantage of space elements is their higher completion stage when delivered from the factory, but transporting them can be difficult and might require special arrangements. Space elements can easily be damaged during transport. Transport of structure elements is easier and in some cases the solutions wanted by the client can be realized more flexibly. The disadvantage is the increased amount of labour at the construction site and exposure to the conditions of the construction site. Building the wooden house elements is carried out by utilising usual woodworking methods and the main advantage of element construction is achieved when the construction takes place in good conditions indoors at the factory.

CLT (Cross Laminated Timber) elements are one of the element construction methods. A CLT element made of solid lumber is formed by a number of lumber panel layers, the material thickness and number of which define the strength and thickness of the element. The structure of a CLT element is very strong and impermeable. The largest possible size of an element is 4.8 x 40.00 m and the thickness can be from 40 to 400 mm. The elements can be insulated, finished and provided with HVAC openings at the factory.

Due to their impermeable structure prefabricated CLT elements provide an easy way to build a passive-energy house, with no need for a separate air or vapour barrier. Due to the absence of cold bridges in the layer structure the CLT element functions as a part of the heat insulation of the building and improves the energy efficiency of the building. The massive lumber element allows a frame structure with a long service life and good fire resistance.

CLT creates new possibilities for design and flexibility of buildings. The stiffness of CLT allows high structures as well as large openings without additional stiffening members. Additionally extension, roof and staircase solutions without pillars can be made in horizontal structures. The frame material can be left visible or it can be lined. On the outside CLT buildings can be lined with lumber, plastered insulation or thin plaster panels. Due to its minimal expansion and compression CLT can easily be combined with other building materials, such as glass or steel.

As CLT elements are formed of a massive lumber frame carrying the loads exposed on the structure and it usually also forms at least a part of the insulation capability of the structure, the element requires a large amount of wood as raw material. The element will be considerably heavy, and making openings, such as doors and windows, is expensive, as a lot of massive waste material will be produced. A element having lightweight insulation material is described in WO 2015/155105. The document includes also a method for joining the elements. WO8000586A1 describes a known method of fastening elements.

### SHORT DESCRIPTION OF THE INVENTION

The invention is defined by the features of the independent claims. Some especial embodiments are described in the dependent claims.

According to the first feature of the invention there is provided a method of fastening elements, in which
- the edges of two box-structure elements are arranged against each other, the elements comprising:
   ∘ a first surface panel,
   ∘ a second surface panel arranged at a distance from the first surface panel, and
   ∘ a spacer structure attaching the first and second surface panel to each other and defining the distance therebetween, wherein the spacer structure comprises a surrounding timber running parallel with the edges of the element, fastening the surface panels to each other and in which at least one of the surrounding timbers (3) of the edge of the element is provided with a groove for a locking tenon,
- the grooves formed into the surrounding timbers of the elements are arranged to face each other,
- a tenon fastening the elements together is arranged into the grooves, and
- the edges of the elements are pushed away from each other by inserting pressure medium into at least one pressure tightening gap.

According to the second feature of the invention there is provided a method in which the edges of both elements are provided with two grooves located at a distance from each other and the pressure tightening gap is formed between the tenons placed into these grooves.

According to the third feature of the invention there is provided a method in which at least one pressure tightening gap is formed into the groove of the surrounding timber of the edge of the element and the groove is sealed so that the pressure tightening gap can be filled with a pressure medium, especially with air or an expanding insulation material.

according to the fourth feature of the invention there is provided a method in which a bag filled with pressure medium is placed into at least one pressure tightening gap.

According to the fifth feature of the invention there is provided an element in which the pressure medium is compressed air.

According to the sixth feature of the invention there is provided an element in which the pressure medium is expanding foam.

According to the seventh feature of the invention there is provided a method in which at least one tenon element is placed into the gap between the elements.

According to the eighth feature of the invention there is provided a method in which one groove is formed to the edge of the elements to be fastened and one tenon is arranged into opposing grooves.

### BRIEF DESCRIPTION OF DRAWINGS

Figure 1 is an exploded view of an element according to some embodiments of the invention;
Figure 2 is a detail of figure 1;
Figures 3 and 4 illustrate the fastening method used in some embodiments of the invention.
Figure 5 illustrates another fastening method used in some embodiments of the invention.

### EMBODIMENTS

### DEFINITIONS

The structure of the massive lumber panel, CLT panel is defined in the RIL 205-1-2009 instructions as follows:

CLT is manufactured from finger-jointed strength-sorted spruce, fir or pine lumber. The strength class of the lamella in each layer is from C16 to C40. The thickness of the fully planed board is from 8 to 45 mm and the width of the board is at least 4 times the thickness. The crossing board layers are glued at an angle of 90 in relation to each other.

CLT has at least 2 and at most 20 layers of lamellae. The thickness of a CLT panel is from 16 mm to 350 mm.

The cross-section is symmetrical. In a five-layer panel the two uppermost board layers may, at most, be parallel. When the panel comprises at least 7 layers of lamellae, no more than three superimposed layers may be parallel. The main portions of adjacent boards are glued to each other by their edges in a non-structural manner. The maximum allowed gap between adjacent boards is 2 mm for 10 % of the boards and a maximum of 4 mm for 3 % of the boards.

In this description a CLT panel means a layered panel structure consisting of cross-laminated lumber layers having at least three superimposed layers.

Plywood is a planar lumber product produced from at least three thin veneers by gluing them together.

The invention relates to a box-structure element for buildings, especially for a single-family house, terraced house or a small block of flats, the surfaces of the element being of CLT panel (cross-laminated timber). Preferably wood shavings are used a insulation in the box structure. Wood shavings are a byproduct of wood processing industry. Using wood shavings is an ecological solution that increases its value added by processing. The box structure realizes an insulating, breathable and natural element with a minimized amount of joints. Tightness of the building is achieved without using plastics. Due to its tightness the element is a fire-safe construction solution.

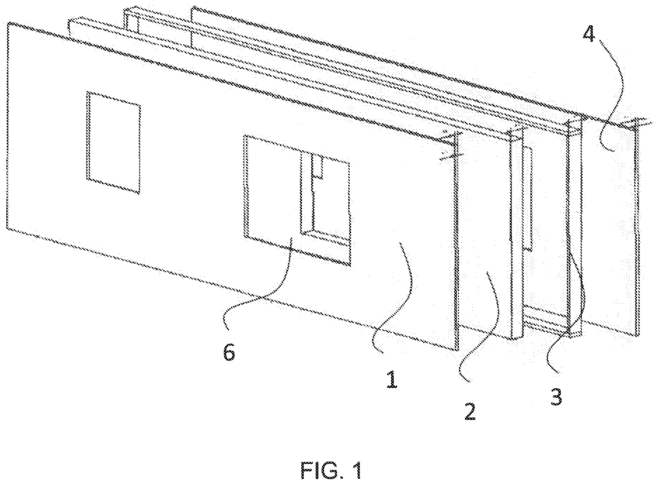

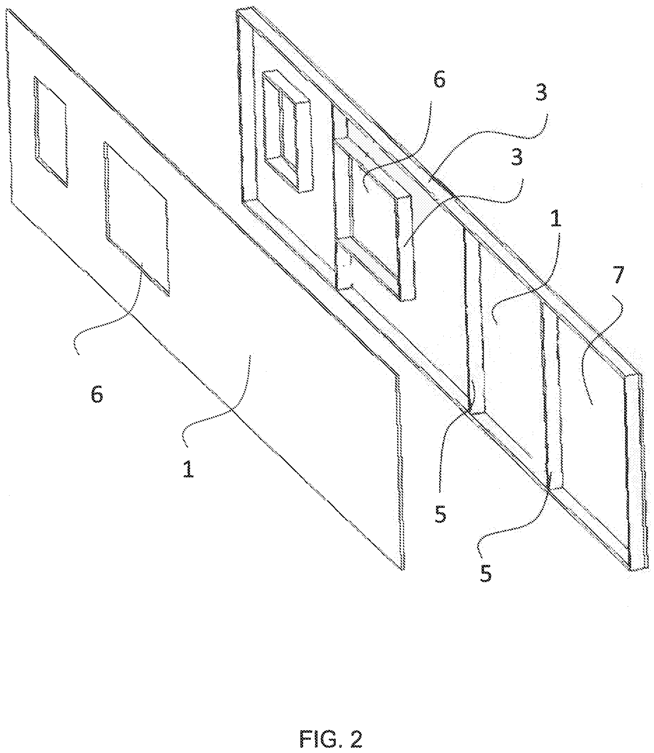

Figures 1 and 2 illustrate one embodiment of the invention. In this embodiment the surface panels 1, 4 are CLT panel or cross-glued panel. In a cross-glued panel one lumber layer is formed of a panel formed of panels by means of a tongue and groove joint and in a cross-glued panel there are at least three of these layers glued one on top the other. In both or only one of the panels 1, 4 one or both surfaces of the panel can be of a high-quality wood for forming a high-quality surface or the surface panel can be made of wood of lesser value or even reject wood. In this case it is often necessary to finish the surfaces of the panels to suit the application. For example, residential buildings require a better surface quality then work environments or storage buildings. The surface panels can also be made of plywood or CIT panel. The panel structure must, however, consist of three lumber material layers. 24 mm can be used as a reference for minimum panel thickness. Thus the surface panel is dimensionally stable and dimensional movement doesn't break the paint surface or other finish of the surface.

Due to the box structure the surface panels 1, 4 can be thin and light. Due to the structure and materials both the insulation and breathability are good because the sealed surface panels and, when necessary, total absence of joints in the surfaces produce such a tight a structure that the insulation is sufficient without sealing foils or the like. At the same time the element is, however, breathable due to its wood structure. Thin surface panels breath better than a fully massive lumber structure.

A box structure has been formed of the surface panels 1, 4 by means of a spacer structure. Here the spacer structure comprises a surrounding timber 3 running along the edges of the element and stiffening timbers 5. The surrounding timber 3 runs along the edge of the element either flush with the surface panels 1, 4 or at a distance inside from the edge. If the surrounding timber 3 is set flush with the edges of the surface panels the edge will be even, whereby the risk of damage to the surface panels is reduced and the edge is planar and tidy. However, if the surrounding timber 3 is pulled inside of the outer edge of the surface panel 1, 4, various attachment surfaces for attaching the elements to each other can be arranged into the formed groove. The surrounding timber 3 also runs around the openings 6 formed into the surface panels 1, 4 and thereby also to the element. The openings 6 can be doors, windows or other openings necessary for the building. The openings can be made into the surface panels by e.g. CNC machining methods, whereby they are fast and easy to make. In these places a surrounding timber 3 pulled inside from the edge of the opening 6 can be used for forming an installation collar for a window frame or door. The openings 6 of the surface panels 1, 4 can also be different in size so that a threshold or lip is formed in the corner of only one panel or surrounding timber 6. The box structure can be divided into subdivisions and its bearing capacity and strength can be varied by using the desired amount of stiffening timbers 5. The stiffening timbers 5 most preferably extend from one edge of the circumference formed by the framing timbers to the other edge. The stiffening timbers 5 can also act as a part of the surrounding timber 3 at the openings 6. Most preferably the surrounding timber 3 runs without interruptions along the edges of the surface panels and openings, but cuts and openings can be made thereto, if necessary, for pass-throughs or tubes.

The dimensions and number of the surrounding timber 3 and the stiffening timber 5 define the thickness, stiffness and other strength properties of the element together with the dimensioning of the surface panels 1, 4. The width of the surrounding timber 3 and the stiffening timbers 5 sets the distance between the surface panels 1, 4 and their thickness changes the strength of the box structure. Stiffening timbers 5 are used to achieve a sufficient stiffness. On the other hand, it will be easier to later form openings between the stiffenings during the service life of the building. Thus a sufficient amount of compartments formed by the stiffening timbers increases the flexibility of the building for different requirements. The surrounding timber 3 and the stiffening timbers can be sawn lumber or glued timber produced by various means. Usual woodworking fastening methods can be used for attaching the surrounding timber 3, stiffening timbers 5 and the surface panels 1, 4, such as gluing, nails, screws, special connectors and shaped joints such as mitre joints. According to one embodiment the surface panels 1, 4 are fastened to the surrounding timber 3 and the stiffening timbers 5 by means of gluing. This produces a strong and tight structure and the method is well suitable for industrial production. Gluing produces an air-tight structure. If necessary, the gluing can be secured with screws.

According to one embodiment of the invention the spaces 7 formed by the surrounding timber 3 and the stiffening timbers 5 are filled with insulation 2. The insulation can be any suitable insulation, but as the element is otherwise a wooden structure, insulation materials based on natural fibers are preferable. According to one embodiment of the invention the insulation is wood shavings. Wood shavings are produced in various processes of wood processing industry. The shavings should be dry enough and it is preferable to remove fractions that are too small, especially dust. Compressing wood shavings and a bonding agent will produce a solid insulation. In the compression a mass of wood shavings having a specific density of about 100 kg/m³ is compressed to about double density, whereby its specific density is increased to about 200 kg/m³. The necessary amount of bonding agent is very small. In one embodiment the bonding agent can be a fireretardant agent, such as water glass or other commercially available fire suppression agent. The compression can be minimal, similar to the amount of the bonding agent, because their purpose is only to prevent the compression of the insulation during use. As the insulation is inside the box structure, it does not have to withstand mechanical stresses.

The insulation 2 can be compressed into ready pieces that are cut to the shape of the boxes of the element or the insulation 2 can be pressed directly into the boxes during manufacture of the elements. Insulation, like the other structures of the element, can be a fully natural material. In addition to the described shavings e.g. cellulose wadding, sheep wool, peat or plant-based fibre materials can be used as insulation. The compartments of the box structure of the elements, compression and bonding agent can be used for having an effect on the creeping of the insulation during use and for producing an element that retains its insulation capability. The advantage of wood shaving insulation is that the whole structure of the element is of the same material.

With massive timber a structure thickness of 280 mm is needed for achieving sufficient insulation. By means of a box element a similar structure thickness will produce a corresponding insulation. This will achieve considerable savings as the specific mass of massive timber is about 400 to 450 kg/m³. In a box structure the insulation forms a considerable part of the volume and its specific mass is of the order of 200 kg/m³. As all the parts of the element can be of same material, wood, the properties of the element are close to those of log structure. The box structure is stiff during transport and its surface panels work as the body of the element.

Byproduct flows and reject of wood processing industry can be utilised in the element, such as wood shavings as insulation and rejected or lower value sawn material can be used production of the surface panels. For example, surface panels can be made of lower quality, rejected or otherwise unsaleable panel. This allows using these materials for better profit than by e.g. burning them or selling them for a very low price.

The element can have a finished surface or the surfaces can be finished at the construction site. One surface structure of the outer wall can be ventilated board cladding.

Buildings and space elements can be assembled of the elements as necessary and the elements can be used in ceilings, floors and intermediate floors as well as in any structure in which stiffness of the element is required. For internal wall structures omitting the insulation material can be contemplated, but this will reduce sound insulation. Usual wood construction methods can be used for attaching the elements and insulating their joints.

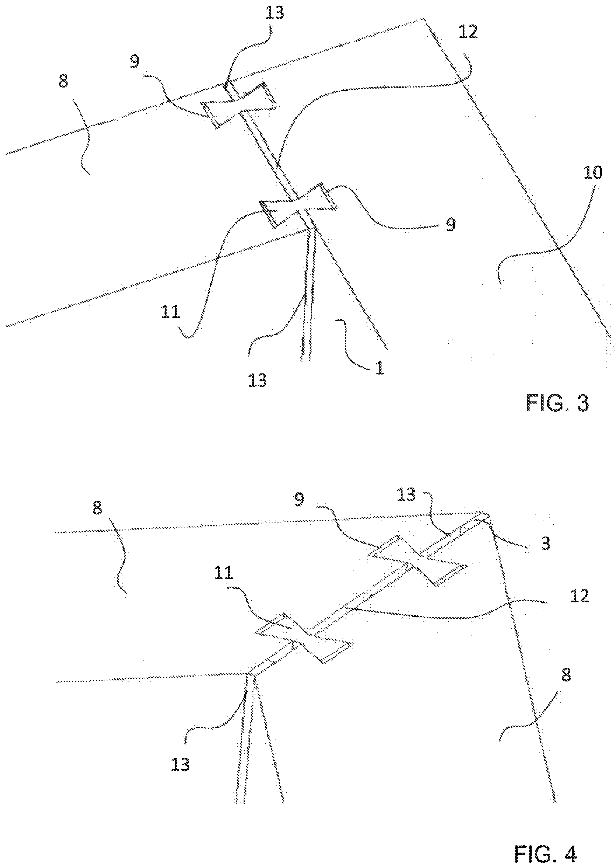

Figures 3 and 4 illustrate an attachment method of elements by means of which the embodiments of the invention can be carried out. In the example of figure 3 the first element 8 and the second element 10 are joined to each other in right angle so that the edge comprising the surrounding timber 3 of the first element will be against the surface panel 1 of the second element 10. Here the edge of the first element 8, the surrounding timber 3, is provided with grooves for tenons. Here they are two dovetail grooves 9. The edge of the second element 10 is provided with corresponding dovetail grooves 9. The elements 8, 10 must be sufficiently strong at their edge regions for forming the dovetail grooves 9. This can be guaranteed by using a sufficiently massive surrounding timber 3 extending to the grooves or by reinforcing the element at the dovetail grooves. The dovetail grooves can extend to the whole height of the element, whereby the keys be installed by pushing from above. Here the tenons are butterfly tenons 11 consisting of two opposing triangular keys. When the tenons 11 extend to the whole length of the element joint, the joint will be strong along its whole length. The shape of the grooves and tenons can vary. The tenons can be, for example, an I profile in shape or shaped like bars with a web between them so that the cross-section of the bars is circular or semicircular. The essential point is that the grooves and tenons have surfaces that are pressed against each other. Preferably these surfaces are shaped so that a joint tightened by wedging is formed between the surfaces.

The essential feature of the joint described above is the pressure tightening gap 12 remaining between the tenon grooves 9 and the tenons arranged thereto and the surfaces of the elements. This pressure tightening gap can be provided with a bag filled with pressure medium or the pressure tightening gap can be filled with an expanding material, such as known insulation foams. The bag to be filled with pressure medium can be fastened between the tenon grooves already at the factory or it can be arranged at the location of the joint when attaching the elements. Compressed air is a preferred pressure medium, as it is usually available at construction sites and it's not harmful to health. However, liquid pressure or other pressure medium can also be used when necessary or the bag can be filled with an expanding insulation. Due to the length of the joint the area under pressure will be large, whereby a large tightening force can be achieved already with a small pressure.

In figure 4 the edges of the elements are chamfered to an angle of 45 . The advantage of this is that the tenon grooves 9 can be made into the surrounding timber 3. The tenon grooves are perpendicular to the surface of the framing timber. The edges of the elements are similar.

The elements 8,10 are joined as follows. The elements are aligned and installed with the tenon grooves 9 aligned and the tenons 11 are arranged in the grooves. Then the pressure tightening gap is pressurized by means of a pressure medium bag or expanding filler material. Now the pressure pushes the elements away from each other and the tenon grooves are tightened to the tenons. When a sufficient tightening force has been reached, locking battens 13 are hit or pushed on both sides at the edges of the gap at the location of the joint for locking the joint and sealing the gap as well as finishing the appearance of the joint. As the joint is formed along the height of the whole element/the length of the joint, a strong and immobile joint is produced even though the forces exerted on the mating surfaces are reasonable.

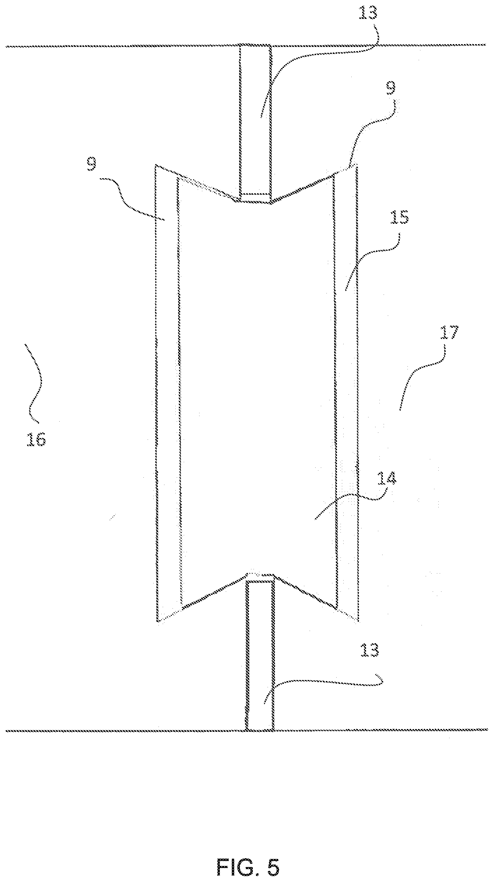

Figure 5 illustrates an embodiment of the element and joining method in which one locking tenon is used, in this example a wide butterfly tenon 14. There are two pressure tightening gaps 15 and they are arranged at the bottom of the dovetail grooves 9 between the dovetail groove 9 and the butterfly tenon 14. In order to tighten the joint on both sides both elements 16, 17 to be joined must have a pressure tightening gap. The elements 16, 17 are joined otherwise in a corresponding way as in the above example, but now a tightening pressure must be formed into the pressure tightening gap 16, 17 of both elements. The pressure can be formed by similar methods as in the previous example, i.e. a pressure bag installed in the tightening gap 15 on site, a preinstalled pressure bag or expanding sealing agent. It can, of course, be contemplated that the gap between the locking tenon and the dovetail groove is made so accurately or provided with sealing members so that a tightening sufficient for the pressure medium is achieved. However, in this case the gap formed by the dovetail groove and the butterfly tenon must sufficiently sealed at both ends of the gap. The sealing can be provided by means of sealing members or wedges.

The joint is locked by means of locking battens or other tenon elements, such as short tenons for keeping the edges of the element apart so that the locking tension is maintained in the locking tenons. The advantage of a long locking batten is the even distribution of forces along a long distance and small surface pressures.

The various features and structures of the joining methods described above can be combined to form a joining method suitable for each joining application.

The strength and stiffness of the structure can be increased by fastening the element on the top plates or sill plates or other structures of the building, such as floor, intermediate ceiling or roof. These structures can also be formed of corresponding elements.

The elements can be provided with boxes or tubes as well as openings for electrical and data communications cabling and, if necessary, with corresponding equipment for other HVAC equipment.

### INDUSTRIAL APPLICABILITY

At least some embodiments of the invention can be used for housing construction for forming various spaces and buildings.

**REFERENCE NUMBER LIST**

| | |
|---|---|
| 1 | first surface panel |
| 2 | insulation |
| 3 | surrounding timber |
| 4 | second surface panel |
| 5 | stiffening timber |
| 6 | opening |
| 7 | space |
| 8 | first element |
| 9 | key groove |
| 10 | second element |
| 11 | tenon |
| 12 | pressure tightening gap |
| 13 | locking batten |
| 14 | wide tenon |
| 15 | pressure tightening gap |
| 16 | first element |
| 17 | second element |

## Claims

1. A method of fastening elements, in which
the edges of two box-structure elements (16, 17) are arranged against each other, both elements comprising:
- a first surface panel (1),
- a second surface panel (4) arranged at a distance from the first surface panel (1),
- a spacer structure (3, 5) attaching the first (1) and second (4) surface panel to each other and defining the distance therebetween, wherein the spacer structure (3, 5) comprises a surrounding timber (3) running parallel with the edges of the element, fastening the surface panels (1, 4) to each other and in which at least one of the surrounding timbers (3) of the edge of the element is provided with at least one groove (9) for a locking tenon (11, 14),
- the grooves (9) formed into the surrounding timbers (3) of the elements (16, 17) are arranged to face each other, and
- a tenon (11, 14) fastening the elements (16, 17) together is arranged into the grooves (9),
**characterized in that**
- the edges of the elements (16, 17) are pushed away from each other by inserting pressure medium into at least one pressure tightening gap (12, 15).

2. A method according to claim 1, wherein the edges of both elements are provided with two grooves (9) located at a distance from each other and the pressure tightening gap is formed between the tenons (11) placed into these grooves (9).

3. A method according to claim 1, wherein at least one pressure tightening gap is formed into the groove (9) of the surrounding timber (3) of the edge of the element and the groove is sealed so that the pressure tightening gap (15) can be filled with a pressure medium, especially with air or an expanding insulation material.

4. A method according to any of the above claims, wherein a bag filled with pressure medium is placed into at least one pressure tightening gap (12, 15).

5. A method according to any of the above claims, wherein the pressure medium is compressed air.

6. A method according to any of the above claims 1 to 5, wherein the pressure medium is expanding foam.

7. A method according to any of the above claims, wherein at least one tenon element (13) is placed into the gap (12) between the elements.

8. A method according to any of the above claims 1 or 3 to 7, wherein one groove (9) is formed into the edge of the elements (16, 17) to be fastened and one tenon (14) is arranged into opposing grooves (9).

9. A method according to any of the above claims, wherein a building is made comprising at least two elements fastened together by means of the method described in claims 1 to 8 and comprising at least two parts of the building selected from group of: wall, floor, ceiling intermediate floor, intermediate wall.

## Patentansprüche

1. Verfahren zum Befestigung von Elementen, bei dem
die Kanten von zwei Kastenstrukturelementen (16, 17) gegeneinander angeordnet werden, wobei beide Elemente Folgendes umfassen:
- eine erste Oberflächenplatte (1),
- eine zweite Oberflächenplatte (4), die in einem Abstand von der ersten Oberflächenplatte (1) angeordnet wird,
- eine Abstandhalterstruktur (3, 5), die die erste (1) und zweite (4) Oberflächenplatte aneinander befestigt und den Abstand dazwischen definiert, wobei die Abstandhalterstruktur (3, 5) ein umgebendes Bauholz (3) umfasst, das parallel zu den Kanten des Elements verläuft, die Oberflächenplatten (1, 4) aneinander befestigt, und wobei mindestens eines der umgebenden Bauhölzer (3) der Kante des Elements mit mindestens einer Nut (9) für einen Verriegelungszapfen (11, 14) bereitgestellt wird,
- wobei die in den umgebenden Bauhölzern (3) der Elemente (16, 17) gebildeten Nuten (9) so angeordnet werden, dass sie einander zugewandt sind, und
- einen Zapfen (11, 14), der die Elemente (16, 17) aneinander befestigt, in den Nuten (9) angeordnet wird,
**dadurch gekennzeichnet, dass**
- die Kanten der Elemente (16, 17) durch Einfügen eines Druckmittels in mindestens einen Druckabdichtungsspalt (12, 15) voneinander weggedrückt werden.

2. Verfahren nach Anspruch 1, wobei die Kanten beider Elemente mit zwei Nuten (9) bereitgestellt werden, die sich in einem Abstand voneinander befinden, und der Druckabdichtungsspalt zwischen den in diese Nuten (9) eingesetzten Zapfen (11) gebildet wird.

3. Verfahren nach Anspruch 1, wobei mindestens ein Druckabdichtungsspalt in der Nut (9) des umgebenden Bauholzes (3) der Kante des Elements gebildet wird und die Nut derart versiegelt wird, dass der Druckabdichtungsspalt (15) mit einem Druckmedium, insbesondere mit Luft oder einem expandierenden Isoliermaterial, gefüllt werden kann.

4. Verfahren nach einem der vorstehenden Ansprüche, wobei ein mit Druckmedium gefüllter Beutel in mindestens einen Druckabdichtungsspalt (12, 15) eingesetzt wird.

5. Verfahren nach einem der vorstehenden Ansprüche, wobei das Druckmedium Druckluft ist.

6. Verfahren nach einem der Ansprüche 1 bis 5, wobei das Druckmedium expandierender Schaum ist.

7. Verfahren nach einem der vorstehenden Ansprüche, wobei mindestens ein Zapfenelement (13) in den Spalt (12) zwischen den Elementen eingesetzt wird.

8. Verfahren nach einem der Ansprüche 1 oder 3 bis 7, wobei eine Nut (9) in der Kante der zu befestigenden Elemente (16, 17) gebildet wird und ein Zapfen (14) in gegenüberliegenden Nuten (9) angeordnet wird.

9. Verfahren nach einem der vorstehenden Ansprüche, wobei ein Gebäude gefertigt wird, das mindestens zwei Elemente umfasst, die mithilfe des in den Ansprüchen 1 bis 8 beschriebenen Verfahrens aneinander befestigt werden, und mindestens zwei Teile des Gebäudes umfasst, die aus der Gruppe: Wand, Boden, Decke, Zwischenboden, Zwischenwand ausgewählt sind.

## Revendications

1. Procédé de fixation d'éléments, dans lequel
les bords de deux éléments de structure de boîte (16, 17) sont agencés les uns contre les autres, les deux éléments comprenant :
- un premier panneau de surface (1),
- un second panneau de surface (4) agencé à une distance depuis le premier panneau de surface (1),
- une structure d'entretoise (3, 5) attachant le premier (1) et le second (4) panneau de surface l'un à l'autre et définissant la distance entre ceux-ci, dans lequel la structure d'entretoise (3, 5) comprend un bois périphérique (3) étant parallèle aux bords de l'élément, fixant les panneaux de surface (1, 4) l'un à l'autre et dans lequel au moins un des bois périphériques (3) du bord de l'élément est pourvu d'au moins une rainure (9) pour un tenon de verrouillage (11, 14),
- les rainures (9) formées dans les bois périphériques (3) des éléments (16, 17) sont agencées pour se faire face les unes aux autres, et
- un tenon (11, 14) fixant les éléments (16, 17) ensemble est agencé dans les rainures (9),
**caractérisé en ce que**
- les bords des éléments (16, 17) sont écartés les uns des autres en insérant un milieu de pression dans au moins un espace de serrage de pression (12, 15).

2. Procédé selon la revendication 1, dans lequel les bords des deux éléments sont pourvus de deux rainures (9) situées à une distance l'une de l'autre et l'espace de serrage de pression est formé entre les tenons (11) placés dans ces rainures (9).

3. Procédé selon la revendication 1, dans lequel au moins un écart de serrage de pression est formé dans la rainure (9) du bois périphérique (3) du bord de l'élément et la rainure est fermée de sorte que l'espace de serrage de pression (15) puisse être rempli avec un milieu de pression, en particulier avec de l'air ou un matériau d'isolation expansif.

4. Procédé selon l'une quelconque des revendications précédentes, dans lequel un sac rempli d'un milieu de pression est placé dans au moins un espace de serrage de pression (12, 15).

5. Procédé selon l'une quelconque des revendications précédentes, dans lequel le milieu de pression est de l'air comprimé.

6. Procédé selon l'une quelconque des revendications 1 à 5 précédentes, dans lequel le milieu de pression est une mousse expansive.

7. Procédé selon l'une quelconque des revendications précédentes, dans lequel au moins un élément de tenon (13) est placé dans l'espace (12) entre les éléments.

8. Procédé selon l'une quelconque des revendications 1 ou 3 à 7 précédentes, dans lequel une rainure (9) est formée dans le bord des éléments (16, 17) à fixer et un tenon (14) est agencé dans des rainures opposées (9).

9. Procédé selon l'une quelconque des revendications précédentes, dans lequel un bâtiment est construit comprenant au moins deux éléments fixés ensemble au moyen du procédé décrit dans les revendications 1 à 8 et comprenant au moins deux parties du bâtiment sélectionnées à partir du groupe consistant en : un mur, un plancher, un plafond, un plancher intermédiaire, un mur intermédiaire.
